# FASCICULE DE BREVET EUROPEEN

(11) **EP 0 395 548 B1**
(45) Date de publication et mention de la délivrance du brevet: **22.09.1993**
(21) Numéro de dépôt: 90420206.6
(22) Date de dépôt: 26.04.1990
(51) Int. Cl.: D04H 1/42

(54) **Armature textile utilisable pour la réalisation de matériaux composites et articles en forme comportant une telle armature**
Textilarmierung, anwendbar für die Herstellung von Formteilen als Verbundstoff oder Artikeln mit einer solchen Armierung
Textil reinforcement for making moulded composite materials and articles with reinforcement

(30) Priorité: 28.04.1989 FR 8906024
(43) Date de publication de la demande: 31.10.1990
(73) Titulaire: ETABLISSEMENTS LES FILS D'AUGUSTE CHOMARAT & CIE. Société Anonyme, F-75008 Paris (FR)
(72) Inventeur: Mahler, Jacques, Roure, F-07160 Le Cheylard (FR)
(74) Mandataire: Laurent, Michel

(56) Documents cités:
- FR-A- 2 078 176
- FR-A- 2 125 408
- FR-A- 2 266 595
- FR-A- 2 276 917
- FR-A- 2 602 178

## Description

L'invention concerne un perfectionnement apporté aux armatures textiles utilisées pour la réalisation de matériaux composites, c'est-à-dire d'articles à base de résine (polyester ou autres) armés d'une nappe textile de renforcement ; elle concerne également un nouveau type d'articles en forme comportant une telle armature.

A ce jour, en fonction des applications et des caractéristiques recherchées, de très nombreuses structures textiles de renforcement sont utilisées dans le domaine des composites, tels que par exemple tissus, grilles textiles, non-tissés ou combinaisons de tels éléments.

Lorsque ces armatures sont constituées de différentes couches superposées, pour assurer leur liaison entre elles, on utilise très souvent la technique dite "couture-tricotage". De tels complexes ressortent notamment des brevets français 1 469 065, 1 095 507, 2 O48 071 et des brevets US 2 890 579 et 3 044 146.

Ces matériaux donnent satisfaction notamment lorsque l'on souhaite réaliser des composites plans. En revanche, lorsque l'on souhaite réaliser des composites emboutis, soit ils présentent une résistance à la déformation trop importante lorsqu'ils comportent des renforts constitués de tissus, soit ils se déchirent ou se déforment de manière irrégulière lorsqu'ils sont à base de mats fibreux.

Par ailleurs, les armatures proposées à ce jour ne permettent que difficilement d'avoir des renforts de forte épaisseur, ce qui est recherché pour certaines applications. En effet, notamment dans le cas d'articles en forme tels que éléments de carrosserie de camions, bateaux de plaisance, citernes.., l'une des caractéristiques mécaniques recherchées est la rigidité qui, et cela est bien connu, est essentiellement fonction de l'épaisseur de l'armature de renforcement. Depuis fort longtemps, afin d'une part de limiter les coûts de l'armature et, d'autre part et surtout, de baisser le poids, il a été proposé de réaliser des armatures comportant un noyau constitué d'une couche de mousse (polyuréthane par exemple) de part et d'autre de laquelle sont disposés les renforts textiles proprement dits, renforts qui sont choisis en fonction des applications souhaitées. Par exemple, de tels renforts textiles peuvent être constitués par des nappes de fils parallèles, longitudinaux et/ou transversaux et/ou en biais par rapport à la longueur du noyau en mousse, éventuellement associés à des tissus, non-tissés.

Pour résoudre le problème de la liaison des différentes couches entre elles dans de tels matériaux et ainsi que cela ressort notamment du brevet français 2 602 178 également au nom du Demandeur, il a été proposé de lier les différentes couches entre elles par couture-tricotage.

Un tel matériau comportant une couche interne en mousse permet d'obtenir des articles de forte épaisseur dans lesquels les couches externes (peau) sont parfaitement liés à l'âme interne. Cependant, lors de la réalisation de certaines formes complexes et surtout lorsque l'on réalise la pièce moulée selon les techniques dites par "moulage à la presse avec injection" ou "moulage sous vide", on a constaté qu'il pouvait se poser des problèmes d'homogénéité étant donné que dans ces techniques, la résine doit pouvoir circuler non seulement à travers mais aussi dans le plan du renfort textile dans l'entrefer du moule.

Or on a trouvé, et c'est ce qui fait l'objet de la présente invention, un perfectionnement apporté aux armatures textiles comportant une pluralité de couches liées entre elles par couture-tricotage qui, non seulement permet d'obtenir des articles ayant une forte épaisseur, mais également présentent la caractéristique de pouvoir être déformées facilement et ce, sans déchirure ni altération dans la répartition des renforts fibreux que comportent de telles armatures ; par ailleurs, le complexe selon l'invention permet d'obtenir des articles moulés, en une seule pièce, présentant des zones d'épaisseur variables ; enfin, le nouveau matériau selon l'invention facilite l'opération d'un moulage, notamment lorsqu'elle est réalisée selon les techniques du moulage à la presse avec injection ou moulage sous vide, la résine se répartissant de façon homogène sur toute l'épaisseur et toutes les directions dudit matériau.

D'une manière générale, l'invention concerne donc un nouveau type d'armature textile utilisable pour la réalisation de matériaux composites, cette armature étant constituée par au moins deux couches de renforts textiles disposés de part et d'autre d'une couche centrale donnant l'épaisseur dudit matériau et elle se caractérise en ce que afin de pouvoir réaliser des articles moulés en forme par moulage à la presse avec injection ou sous vide, la couche centrale donnant l'épaisseur est constituée par une nappe à base de fibres synthétiques, de titre supérieur à 30 dtex, ayant reçu préalablement à leur mise sous forme de nappe un traitement leur communiquant une ondulation (ou frisure) permanente conduisant à la formation d'une nappe légère, épaisse et aérée, les différentes couches étant liées entre elles par couture/tricotage.

En d'autres termes, le choix des fibres entrant dans la constitution de la nappe fibreuse interne du complexe conforme à l'invention est réalisée de telle sorte que lesdites fibres présentent un effet "de ressort" et autorisent la production d'une nappe non tissée légère, épaisse et aérée.

A titre indicatif, comme fibre convenant particulièrement bien pour la réalisation d'un matériau conforme à l'invention, on utilisera des fibres de polyester ayant un titre au moins égal à 30 dtex, une longueur de coupe comprise entre 40 et 70 mm, mais avantageusement de l'ordre de 60 mm et qui ont reçu préalablement un traitement de texturation, par exemple de bourrage leur communiquant une frisure permanente.

Une telle nappe interne est réalisée de manière conventionnelle par cardage et peut éventuellement subir un aiguilletage léger pour lui donner de la cohésion et faciliter son stockage et sa manipulation.

Comme renforts textiles proprement dits disposés de part et d'autre de la couche interne précitée, et qui sont associés à cette dernière par une opération de couture/tricotage, on utilisera tout type de renfort conventionnel pour un tel domaine d'application, à savoir par exemple :
- des fils parallèles jointifs ou contigus ou espacés les uns des autres,
- des nappes bidirectionnelles, c'est-à-dire constituées de deux séries de fils formant entre eux un angle de 90°, par exemple, ces fils pouvant être comme précédemment soit contigus, soit espacés les uns des autres ;
- des nappes fibreuses telles que par exemple nappes de fibres de verre réparties au hasard de part et d'autre de l'âme précitée, ces nappes fibreuses pouvant être associées à des nappes uni ou bidirectionnelles, voire même à des tissus.

Par ailleurs, comme fils de couture/tricotage permettant de lier les différentes couches entre elles, on utilisera de préférence des fils synthétiques relativement fins, de même nature que ceux entrant dans la composition de la couche interne.

L'invention et les avantages qu'elle apporte seront cependant mieux compris grâce à l'exemple de réalisation donné ci-après à titre indicatif et non limitatif.

### Exemple :

Sur un métier conventionnel de couture/tricotage, jauge 7, on a réalisé une armature conforme à l'invention comportant :
- une couche interne constituée par une nappe non tissée, réalisée par cardage, à partir de fibres de polyester ayant un titre unitaire de 40 dtex et une longueur de coupe de 60 mm, les fibres ayant été préalablement frisées avant coupe, de manière à présenter des ondulations permanentes (dans le cas présent 2,3 ondulations par centimètre) ; cette nappe pèse environ 235 grammes/mètre carré et a une épaisseur d'environ 4 mm ;
- deux nappes de renforts textiles proprement dits sont disposées de part et d'autre de la couche interne précitée, ces nappes de renforts textiles étant constituées toutes les deux par un mât de verre pesant 450 grammes/mètre carré, obtenues par découpe de fibres de verre et nappage conventionnel par voie sèche ; ces fibres de verre ont un titre de 25 tex, la longueur de coupe étant de 50 mm.

Ces trois couches sont liées entre elles sur le métier au moyen de fils polyester ayant un titre de 176 tex.

Après couture/tricotage, on obtient une structure ayant une épaisseur d'environ 4,5 mm, les différentes nappes étant parfaitement liées les unes aux autres.

A partir d'un tel matériau, on réalise selon les techniques du moulage à la presse avec injection et du moulage sous vide un article embouti présentant des zones d'épaisseurs variables. On constate que l'opération de moulage se réalise très facilement, l'article embouti présentant une très grande homogénéité, le renfort textile et plus particulièrement les nappes externes à base de fibres de verre restant uniformes et réparties régulièrement de part et d'autre de la couche interne, et ce a proximité des surfaces du matériau composite formé.

## Revendications

1. Armature textile utilisable pour la réalisation de matériaux composites constituée par au moins deux couches de renforts textiles disposés de part et d'autre d'une couche centrale donnant l'épaisseur audit matériau, caractérisée en ce que, afin de pouvoir réaliser des articles moulés en forme par moulage à la presse avec injection ou sous vide, la couche centrale donnant l'épaisseur est constituée par une nappe à base de fibres synthétiques ayant un titre unitaire au moins égal à 30 dtex, ayant reçu préalablement à leur mise sous forme de nappe un traitement leur communiquant une ondulation permanente conduisant à la formation d'une nappe légère, épaisse et aérée, les différentes couches étant liées entre elles par couture/tricotage.

2. Armature textile selon la revendication 1, caractérisée en ce que les couches de renforts textiles disposées de part et d'autre de la couche centrale donnant l'épaisseur, sont constituées de mats fibreux éventuellement associés à d'autres renforts textiles.

3. Armature textile selon l'une des revendications 1 et 2, caractérisée en ce que la nappe interne est à base de fibres de polyester ayant un titre au moins égal à 30 dtex, une longueur de coupe comprise entre 40 et 70 mm.

4. Armature textile selon l'une des revendications 1 à 3, caractérisée en ce que les fils de liage sont à base de fils synthétiques relativement fins, de même nature que ceux entrant dans la composition de la couche interne.

5. Complexe stratifié en forme comportant une armature selon l'une des revendications 1 à 4, caractérisé par le fait qu'il est réalisé par moulage à la presse avec injection ou sous vide.

6. Complexe stratifié selon la revendication 5, caractérisé en ce qu'il présente des zones d'épaisseur variables.

## Patentansprüche

1. Textile Armierung, die zur Herstellung von Verbundmaterialien verwendbar ist, wobei die Armierung aus wenigstens zwei textilen Verstärkungsschichten gebildet ist, die beiderseits einer die Dicke des Materials vorgebenden Zentralschicht angeordnet sind, dadurch gekennzeichnet, daß zum Erhalt von in einer Form durch Preßformung mit Injektion oder unter Vakuum geformten Gegenständen die die Dicke vorgebende Zentralschicht aus einer Lage auf der Grundlage von synthetischen Fasern mit einem einheitlichen Gehalt von wenigstens gleich 30 dtex gebildet ist, wobei sie vor dem Bilden der Lagenform eine sie verbindende Behandlung einer dauerhaften Ondulierung erhalten hat, die zu der Bildung einer leichten, dicken und lufthaltigen Lage führt, und die verschiedenen Schichten untereinander durch Vernähung/Verstrickung verbunden sind.

2. Textile Armierung nach Anspruch 1, dadurch gekennzeichnet, daß die beiderseits der die Dicke vorgebenden Zentralschicht angeordneten textilen Verstärkungsschichten aus faserigen Matten gebildet sind, die eventuell mit weiteren textilen Verstärkungen verbunden sind.

3. Textile Armierung nach einem der Ansprüche 1 und 2, dadurch gekennzeichnet, daß die innere Lage auf der Grundlage von Polyesterfasern mit einem Gehalt von wenigstens gleich 30 dtex und einer Schnittlänge zwischen 40 und 70 mm gebildet ist.

4. Textile Armierung nach einem der Ansprüche 1 bis 3, dadurch gekennzeichnet, daß die Verbindungsfäden auf der Grundlage von verhältnismäßig dünnen, synthetischen Fäden der gleichen Herkunft wie die bei der Zusammensetzung der inneren Schicht verwendeten Fäden gebildet sind.

5. Geformter Schichtkomplex mit einer Armierung nach einem der Ansprüche 1 bis 4, gekennzeichet durch die Tatsache, daß er durch Formpressung mit Injektion oder unter Vakuum hergestellt ist.

6. Schichtkomplex nach Anspruch 5, dadurch gekennzeichnet, daß er veränderliche Dickenbereiche aufweist.

## Claims

1. A textile reinforcing structure capable of being employed for the production of composite materials and consisting of at least two layers of textile reinforcements arranged on both sides of a central layer giving thickness to the said material, characterized in that in order to make it possible to produce shaped molded articles by injection press molding or vacuum molding, the central layer giving the thickness consists of a sheet based on synthetic fibers, of count equal to at least 30 dtex, having received, before they are formed into a sheet, a treatment imparting to them a permanent waving resulting in the formation of a lightweight, thick and aerated sheet, the various layers being bonded together by sewing/knitting.

2. The textile reinforcing structure as claimed in claim 1, characterized in that the layers of textile reinforcements arranged on both sides of the central layer giving the thickness, consist of fiber mats optionally associated with other textile reinforcements.

3. The textile reinforcing structure as claimed in either of claims 1 and 2, characterized in that the inner sheet is based on polyester fibers which have a count equal at least 30 dtex, a staple length of between 40 and 70 mm.

4. The textile reinforcing structure as claimed in one of claims 1 to 3, characterized in that the bonding filaments are based on relatively thin synthetic filaments of the same nature as those forming part of the composition of the inner layer.

5. A shaped laminar composite comprising a reinforcing structure as claimed in one of claims 1 to 4, characterized by the fact that it is produced by injection press molding or vacuum molding.

6. The laminar composite as claimed in claim 5, characterized in that it has variable thickness regions.
